**Europäisches Patentamt**

**European Patent Office**

**Office européen des brevets**

(19)

(11) Veröffentlichungsnummer: **0 350 039 B1**

(12) **EUROPÄISCHE PATENTSCHRIFT**

(45) Veröffentlichungstag der Patentschrift: **15.06.94**

(51) Int. Cl.⁵: **G05B 19/04**, G04G 1/00

(21) Anmeldenummer: **89112377.0**

(22) Anmeldetag: **06.07.89**

(54) **Zähler-/Zeitgeber-Schaltung für einen Microcontroller.**

(30) Priorität: **08.07.88 DE 3823235**

(43) Veröffentlichungstag der Anmeldung:
**10.01.90 Patentblatt 90/02**

(45) Bekanntmachung des Hinweises auf die
Patenterteilung:
**15.06.94 Patentblatt 94/24**

(84) Benannte Vertragsstaaten:
**DE FR GB IT**

(56) Entgegenhaltungen:
**EP-A- 0 180 196**

**2119 EDN vol. 25, no. 18, Oktober 1980, DEN-VER,COLORADO, U.S.A. Seiten 145 - 153; HE-ATHER D. BRYCE: "VERSATILE PROGRAM-MABLE MODULE MEETS MICRO-PROCESSOR TIMING NEEDS"**

(73) Patentinhaber: **SIEMENS AKTIENGESELL-SCHAFT**
**Wittelsbacherplatz 2**
**D-80333 München(DE)**

(72) Erfinder: **Fleck, Rod**
**Helene-Mayer-Ring 12/1**
**D-8000 München 40(DE)**
Erfinder: **Poret, Mark,**
**1339 West-Madero**
**Mesa Arizona 85202(US)**
Erfinder: **Mattheis, Karl-Heinz, Dipl.-Ing.**
**Graf-Sempt-Strasse 23**
**D-8011 Forstinning(DE)**
Erfinder: **Javier, Magana**
**12300 Wycliff Lane**
**Austin Texas 78727(US)**
Erfinder: **Meinhold, Christoph, Dipl.-Ing.**
**Gumstrasse 11**
**D-8033 Planegg(DE)**

**Beschreibung**

Die Erfindung betrifft eine Zähler-/Zeitgeber-Schaltung für einen Microcontroller, wobei diese auf dem Microcontroller integriert ist.

Das Haupteinsatzgebiet von Microcontrollern liegt im Bereich der Steuer- und Regelungstechnik, wo bestimmte Aufgaben unter Echtzeitbedingungen bearbeitet werden müssen. Um dabei die Forderung nach schritthaltender Verarbeitung mit dem zu steuernden oder zu regelnden Prozess einzuhalten, muß die Reaktion des Microcontrollers auf prozesseitige Ereignisse innerhalb gewisser, durch den jeweiligen Prozess vorgegebener maximaler Reaktionszeiten erfolgen.

Dies bedeutet, daß eine einem bestimmten Ereignis zugeordnete Teilaufgabe vollständig abgearbeitet sein muß, bevor ein weiteres Ereignis auftreten darf, welches seinerseits wiederum eine erneute Bearbeitung dieser Teilaufgabe als Reaktion erfordert.

Die Bearbeitungsgeschwindigkeit einer solchen Aufgabe durch einen Microcontroller hängt neben dem Befehlsdurchsatz der Zentraleinheit pro Zeiteinheit in besonderem Maße von der Leistungsfähigkeit der mitintegrierten Peripheriekomponenten ab. Als Peripherie bezeichnet man ganz allgemein die zusätzlich neben der Zentraleinheit auf einem Chip integrierten Schaltungsteile, beispielsweise für Ein-/Ausgabe oder für Zähler- und Zeitgeberfunktionen. Zähler-/Zeitgeber-Schaltungen benutzt man beispielsweise als Echtzeituhren, um interne oder auch externe Ereignisse zu zählen oder auch um zu bestimmten Zeiten vorbestimmte Signale zu erzeugen. Darüberhinaus lassen sich mittels Zähler-/Zeitgeber-Schaltungen auch Frequenzen oder Pulse erzeugen bzw. Frequenzen oder Zeiten messen, wobei diese Funktionen weitgehend unäbhangig von der Arbeit der Zentraleinheit ausgeführt werden.

Fast alle Microcontroller besitzen heute eine oder auch mehrere Zähler-/Zeitgeberstrukturen, die für die unterschiedlichen Betriebsarten speziell ausgelegt sind. Bei den Betriebsarten unterscheidet man beispielsweise:

- Zeitgebermodi:
  Aus dem internen Systemtakt wird eine Uhrenfunktion hergeleitet.
- Zählermodi:
  Externe Ereignisse werden gezählt.
- Kaskadierungsmodi:
  Eine Zähler-/Zeitgeberstruktur wird mit einer zweiten Zähler-/Zeitgeberstrukturzu einer Struktur doppelter Registrierbreite kaskadiert, oder eine Zähler-/Zeitgeberstruktur wird in zwei Strukturen mit halber Registerbreite aufgeteilt.

- Aufwärts-/Abwärts-Zählmodi:
  Der Zähler/Zeitgeber kann sowohl als Aufwärts- als auch als Abwärtszähler betrieben werden.
- Reload-Modi:
  Nach dem Überlaufen eines Zählers/Zeitgebers oder durch ein externes Ereignis wird ein vorher in einem Reload-Register gespeicherter Wert in den Zähler/Zeitgeber geladen, um damit wieder eine definierte Ausgangsbasis herzustellen.
- Capture-Modi:
  Der augenblickliche Inhalt des Zählers/Zeitgebers wird in ein Zwischenregister übernommen, so daß der aktuelle Wert ohne eine Unterbrechung der Zentraleinheit und der Zähler/Zeitgeberfunktionen erfaßt werden kann.
- Compare-Modi:
  Der Inhalt des Zählers/Zeitgebers wird laufend mit einem Compare-Register verglichen und bei Gleichheit der Werte erfolgt eine definierte Aktion der Zähler-/Zeitgeber-Schaltung.

Alle heute bekannten Zähler-/Zeitgeber-Schaltungen können in der Regel in verschiedenen Betriebsarten arbeiten und weisen eine oder mehrere Reload-, Capture- oder Compare-Funktionen auf. Da diese Zähler-/Zeitgeber-Schaltungen meist von vornherein für bestimmte Aufgaben festgelegt sind, bieten sie relativ geringe Variationsmöglichkeiten.

Die bisher bekannten Schaltungen haben für den Anwender und Hersteller von Mikrocontrollern folgende Nachteile:

- Der Anwender kann die Zähler-/Zeitgeber-Schaltung nur im Rahmen der vorgegebenen Funktionen nutzen. Diese Einschränkungen führen dazu, daß zwar für die Lösung einer Aufgabe die dafür nötige Anzahl von Zähler-/Zeitgeber-Schaltungen vorhanden ist, die Schaltungen aber nicht die benötigten Betriebsarten gestatten.
- Da sich die integrierten Zähler-/Zeitgeber-Schaltungen durch die jeweilige Festlegung auf bestimmte Funktionen voneinander unterscheiden, erfordert jede dieser Strukturen eine unterschiedliche Behandlung bei der Programmierung.
- Für den Hersteller bedeutet jede spezielle Zähler-/Zeitgeberschaltung eine eigene Entwicklung, mit einem enormen Aufwand an Zeit und Kosten.

Es sind somit keine Zähler-/Zeitgeber-Schaltungen bekannt, bei denen dem Anwender alle oben genannten Funktionen zur Verfügung stehen und er somit in der Lage wäre, aus dem Funktionsangebot der Zähler-/Zeitgeber-Schaltungen die für die jeweilige Aufgabe optimale Betriebsart auszuwählen.

Aufgabe der vorliegenden Erfindung ist es, eine Zähler-/Zeitgeber-Schaltung für einen Microcontroller anzugeben, die leicht herstellbar ist, die vorstehend dargelegten Nachteile behebt und universell einsetzbar ist.

Gelöst wird diese Aufgabe durch eine auf dem Microcontrollerchip integrierte Zähler-/Zeitgeber-Schaltung mit einem Zentral-Register und zwei Hilfs-Registern, wobei die Übertrags-Ausgänge aller drei Register mit je einem zugeordneten, bistabilen Ausgangsspeicherelement und einem Unterbrechungsanforderungs-Flag sowie die Zähl-Eingänge jedes Registers über ein Start-/Stopp-Element mit einem zugeordneten Eingangskontrollblock verbunden sind und beide Hilfs-Register über Reload-, Capture- und Compare-Einheiten an das Zentral-Register angeschlossen sind.

Durch die Strukturierung der Zähler-/Zeitgeber-Schaltung in ein Zentral-Register und zwei Hilfs-Register wird ein einheitlicher Grundaufbau sichergestellt, der für den Benutzer unabhängig von der jeweiligen Aufgabe eine einheitliche Handhabung aller drei Register erlaubt.

Ein weiterer Vorteil der Erfindung besteht darin, daß der Anwender die implementierten Zähler/Zeitgeber-Schaltungen optimal nach seinen eigenen Bedürfnissen nutzen kann, ohne vom Hersteller auf eine bestimmte Funktionsweise festgelegt zu sein. Andererseits wird auf dem Baustein insgesamt weniger Platz beansprucht, da die Schaltungen universell einsetzbar sind und deshalb nicht mehrere Strukturen mit festgelegten Betriebsmodi implementiert werden müssen. Der Hersteller kann außerdem sehr schnell und flexibel auf geänderte Markterfordernisse reagieren, und beispielsweise Microcontroller mit mehreren, gleich aufgebauten Zähler-/Zeitgeber-Schaltungen herstellen.

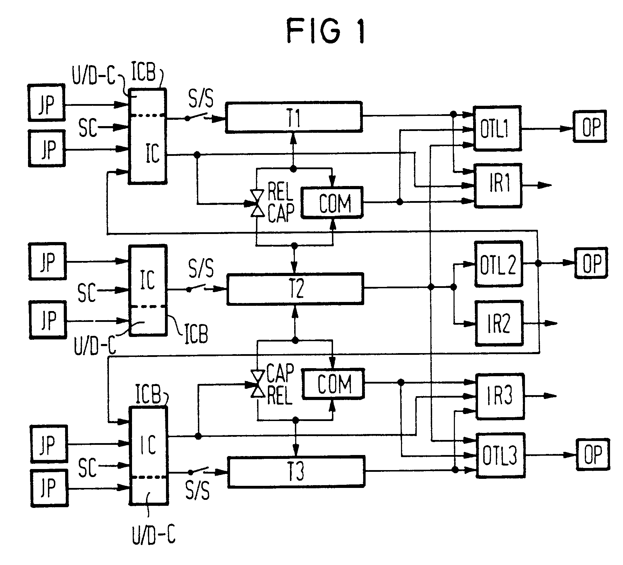

In der Zeichnung ist eine erfindungsgemäße Zähler-/Zeitgeber-Schaltung dargestellt, anhand derer verschiedene Betriebsmodi erläutert werden.

Ein Zentral-Register T2 und zwei Hilfs-Register T1, T3 sind dabei über Start-/Stopp-Elemente S/S an je einen Eingangskontrollblock ICB angeschlossen, der eine Eingangskontrollschaltung IC sowie eine Aufwärts-/Abwärts-Zählschaltung U/D-C enthält. Die Eingangskontrollblöcke ICB werden vom Systemtakt SC versorgt und sind über Eingangspins IP mit externen Schaltungen verbunden. Die Ausgänge der Register T1, T2, T3 sind an je ein zugeordnetes Unterbrechungsanforderungs-Flag IR1, IR2, IR3 sowie an je ein bistabiles Ausgangsspeicherelement OTL1, OTL2, OTL3 angeschlossen.

Der Übertrags-Ausgang des Zentral-Registers T2 ist dabei zusätzlich mit den bistabilen Ausgangsspeicherelementen OTL1, OTL3 der Hilfsregister T1, T3 verbunden. Alle drei Ausgangsspeicherelemente OTL1, OTL2, OTL3 sind an Ausgangspins OP des Microcontrollers angeschlossen. Der Ausgang des bistabilen Ausgangsspeicherelementes OTL2 des Zentral-Registers T2 ist dabei zusätzlich an die Eingangskontrollblöcke ICB der Hilfs-Register T1, T3 angeschlossen, während weitere Ausgänge dieser beiden Eingangskontrollblöcke ICB direkt mit den Unterbrechungsanforderungs-Flags IR1, IR3 der zugehörigen Hilfs-Register T1, T3 und mit Reload- und Capture-Einheiten REL, CAP in Verbindung stehen. Über die Reload- und Capture-Einheiten sowie Compare-Einheiten COM sind die beiden Hilfs-Register T1, T3 an das Zentral-Register T2 angeschlossen. Die Ausgänge der Compare-Einheiten COM stehen mit den Unterbrechungsanforderungs-Flags IR1, IR3 und den bistabilen Ausgangsspeicherelementen OTL1, OTL3 der beiden Hilfs-Register T1, T3 in Verbindung.

Mit dieser Zähler-/Zeitgeber-Schaltung lassen sich die folgenden Betriebsmodi realisieren, wobei zunächst Funktionen beschrieben werden, die für alle drei Register gleich sind.

- Zeitgebermodus:
  Der gewünschte Takt wird aus dem Systemtakt SC erzeugt.
- Gesteuerter Zeitgeber:
  Der Takt wird wie beim Zeitgebermodus aus dem Systemtakt SC abgeleitet und durch ein externes Signal, das an den Eingangspins IP anliegt, ein- oder ausgeschaltet.
- Zählermodus:
  Der Takt wird über einen Eingangspin IP von außen zugeführt.
- Auswahlmöglichkeiten für den Eingangstakt:
  Im Eingangskontrollblock ICB können durch verschiedene Teilerfaktoren aus dem Systemtakt SC unterschiedliche Eingangstaktfrequenzen erzeugt werden. Dies ist auch dann möglich, wenn die Schaltung im gesteuerten Zeitgeber-Modus arbeitet. Wird der Eingangstakt aus einem externen Signal abgeleitet, so kann der Eingangstakt durch die positive, die negative oder auch durch beide Flanken des externen Signales festgelegt werden. Statt den internen Systemtakt SC direkt in die Eingangskontrollblöcke ICB zu leiten, kann dieser über einen separaten Vorteiler laufen, der verschiedene Frequenzen generiert, die dann an die Eingangskontrollblöcke ICB geleitet werden. Dort kann dann für den Zeitgeber-Modus eine dieser Frequenzen ausgewählt werden.
- Auf/Abwärts-Zählrichtung:
  Die Zählrichtung kann sowohl über ein Programm (Software) als auch über ein externes Eingangssignal gesteuert werden.
- Unterbrechungsanforderungs-Funktion:
  Über die Unterbrechungsanforderungs-Flags IR1, IR2, IR3 kann eine interne Unterbrechungsanforderung an die Zentraleinheit abgegeben werden, wenn das jeweilige Register T1, T2, T3 einen Zählerüberlauf bzw. -unterlauf verursacht, d. h. wenn über die größte darstellbare Zahl hinausgezählt oder beim Abwärtszählen unter Null gezählt wird.

- Speicherelement-Funktion:
  Die bistabilen Ausgangsspeicherelemente OTL1, OTL2, OTL3 schalten bei jedem Überlauf/Unterlauf des entsprechenden Registers T1, T2, T3 um. Über die Ausgangspins OP kann dieses Umschaltsignal z.B. auf Peripherieschaltungen übertragen werden.

- Start/Stopp-Funktion:
  Über die Start/Stopp-Elemente S/S kann die implizierte Modifikation des Inhalts der Register T1, T2, T3 durch den Betrieb der Zähler-/Zeitgeber-Schaltung gestartet oder gestoppt werden.

Neben diesen Betriebsmodi, die bei allen drei Registern T1, T2, T3 gleichzeitig und unabhängig voneinander eingestellt werden können, sind auch Betriebsweisen möglich, bei welchen jedes Register abhängig von der ausgewählten Betriebsart eines anderen Registers oder beider anderen Register konfiguriert werden kann. Beispiele hierfür sind:

- Gesteuerter Zeitgebermodus:
  Über den Ausgang des bistabilen Ausgangsspeicherelementes OTL2 können die Zeitgeber-Funktionen der Hilfs-Register T1, T3 gesteuert werden.

- Kaskadierungsmodus:
  Das Ausgangssignal des Ausgangsspeicherelementes OTL2 kann hier als das Eingangssignal für die beiden Hilfs-Register T1, T3 im Zählmodus verwendet werden.

- Capture-Modus:
  Hierbei wird der Inhalt des Zentral-Registers T2 in eines der Hilfs-Register T1, T3 gespeichert. Dies erfolgt entweder programmgesteuert durch einen Befehl, welcher eines der Hilfs-Register T1, T3 als Zieloperanden benutzt, oder aber durch ein externes Eingangssignal. Zusätzlich können dabei die Unterbrechungsanforderungs-Flags IR1 bzw. IR3 gesetzt werden.

- Reload-Modus:
  Das Zentral-Register T2 wird mit dem Inhalt eines der beiden Hilfs-Register T1, T3 geladen, wenn entweder ein Überlauf/Unterlauf im Zentral-Register T2 vorliegt, oder ein externes Eingangssignal anliegt, oder aber ein Übergang am Ausgang des Ausgangsspeicherelementes OTL2 des Zentral-Registers T2 auftritt. Sowohl ein externes Eingangssignal als auch ein Übergang des Ausgangsspeicherelementes OTL2 bewirkt ein Setzen des Unterbrechungsanforderungs-Flags IR1 bzw. IR3.

- Compare-Modus:
  Der Inhalt des Zentral-Registers T2 wird dabei ständig mit dem Inhalt der Hilfs-Register T1 oder T3 verglichen. Bei einer Übereinstimmung wird das entsprechende Ausgangsspeicherelement OTL1 bzw. OTL3 sowie das entsprechende Unterbrechungsanforderungs-Flag IR1 bzw. IR3 gesetzt. Ein Überlauf/Unterlauf des Zentral-Registers T2 bewirkt dabei ein Rücksetzen der Ausgangsspeicherelemente OTL1 bzw. OTL3.

Im allgemeinen sind also durch die dargestellte Zähler-/Zeitgeber-Schaltung die folgenden Funktionsweisen möglich:

Erstens können sowohl das Zentral-Register T2 als auch die beiden Hilfs-Register T1, T3 als unabhängige Zähler/Zeitgeber programmiert werden, wobei jedes Register unabhängig aufwärts-oder abwärtszählen und bei Bedarf ein Überlauf-/Unterlauf-Signal abgeben kann. Zweitens kann jedes der beiden Hilfsregister T1, T3 als Reload-, Capture- oder Compare-Register für das Zentral-Register T2 programmiert werden.

Darüberhinaus sind aber auch spezielle Funktionsweisen möglich, von denen im folgenden zwei beschrieben sind:

So kann beispielsweise das Zentral-Register T2 in Verbindung mit einem der Hilfs-Register T1 oder T3 ein 32-Bit bzw. 33-Bit Zähler-/Zeitgeber-Register bilden, obwohl die einzelnen Register nur für 16 Bit ausgelegt sind. Man erreicht dies dadurch, daß der Ausgang des bistabilen Ausgangsspeicherelementes OTL2 auf den Zähl-Eingang eines der Hilfs-Register T1 oder T3 geschaltet wird und die Hilfs-Register T1, T2 im Zählermodus betrieben werden. Der Eingang eines Hilfs-Registers T1 oder T3 ist dabei so zu programmieren, daß er nur auf eine positive oder nur auf eine negative Flanke des vom Ausgangsspeicherelement OTL2 abgegebenen Signals reagiert. Die beiden hintereinander geschalteten Register bilden dann ein 33-Bit-breites Zähler-/Zeitgeber-Register (16 Bit T2 + 1 Bit OTL2 + 16 Bit T1 oder T3). Falls der Eingang eines Hilfs-Registers T1 oder T3 jedoch so programmiert ist, daß er sowohl auf eine positive als auch auf eine negative Flanke des vom Ausgangsspeicherelement OTL2 abgegebenen Signals reagiert, bilden die beiden gekoppelten Register ein 32 Bit Zähler-/Zeitgeber-Register, da das entsprechende Hilfs-Register bei jedem Zustands-Übergang des Ausgangsspeicherelementes OTL2 getaktet wird.

Ein weiterer sehr vorteilhafter Betriebsmodus besteht darin, die Reload-Modi der Hilfs-Register zur Erzeugung von pulsweitenmodulierten Signalen zu benutzen, wobei der Reload-Vorgang entweder nur durch eine positive oder nur durch eine negative Flanke am Ausgang des Ausgangsspeicherelementes OTL2 ausgelöst wird. Eine Variante dieser Funktionsweise besteht darin, nur eines der beiden Hilfs-Register T1 oder T3 im Reload-Modus zu betreiben. Auf diese Weise wird nur in jeder zweiten Periode der Inhalt des Zentral-Registers T2 verändert. Wenn beide Hilfs-Register T1 und T3 als Reload-Register benutzt werden, können die Hilfs-Register so programmiert werden, daß bei jeder positiven Flanke des Ausgangssignals aus dem Ausgangsspeicherelement OTL2 das Zentral-Register T2 vom einen Hilfs-Register und bei jeder negativen Flanke des Ausgangssignals das Zentral-Register T2 vom anderen Hilfs-Register geladen wird. Das Zentral-Register T2 wird somit abwechselnd vom Hilfs-Register T1 oder Hilfs-Register T2 geladen. Während das eine Register damit beispielsweise die Zeitdauer eines High-Zustandes vorgibt, kann das andere Register die Zeitdauer eines Low-Zustandes bestimmen. Das auf diese Weise pulsweitenmodulierte Ausgangssignal läßt sich bei diesen beiden Betriebsarten am Ausgangspin OP des Ausgangsspeicherelementes OTL2 abnehmen.

**Patentansprüche**

1. Zahler-/Zeitgeber-Schaltung für einen Mikrocontroller, mit als Zähler-/Zeitgeber dienenden programmierbaren Registern, welche einen Zähleingang, einen Übertragsausgang und Datenein/ausgänge aufweisen, mit Reloadeinheiten (REL) zum Vorbesetzen eines Zahler-/Zeitgebers, mit Captureeinheiten (CAP) zum Übernehmen des aktuellen Zähler-/Zeitgeberstandes, mit Compareeinheiten (COM) zum Vergleichen des Zähler-/Zeitgeberstandes,
**gekennzeichnet durch** ein Zentral-Register (T2) und zwei Hilfs-Register (T1, T3), wobei die Übertrags-Ausgänge der Register (T1, T2, T3) mit je einem bistabilen Ausgangsspeicherelement (OTL1, OTL2, OTL3) sowie einem Unterbrechungsanforderungs-Element (IR1, IR2, IR3) und die Zähleingänge der Register (T1, T2, T3) über jeweils ein Start/Stopp-Element (S/S) mit je einem Eingangskontrollblock (ICB) zum Steuern des jeweiligen Zahler-/Zeitgebers verbunden sind und die Datenein/ausgänge der beiden Hilfs-Register (T1, T3) jeweils über Reload-(REL), Capture-(CAP) und Compareeinheiten (COM) an den Datenein/ausgang des Zentral-Registers (T2) angeschlossen sind.

2. Zähler-/Zeitgeber-Schaltung nach Anspruch 1, **dadurch gekennzeichnet,** daß die Register (T1, T2, T3) unabhängig voneinander programmierbar sind.

3. Zähler-/Zeitgeber-Schaltung nach einem der vorangehenden Ansprüche, **dadurch gekennzeichnet,** daß jeder Eingangskontrollblock (ICB) eine Eingangskontrollschaltung (IC) und eine Aufwärts-/Abwärts-Zählrichtungssteuerung (U/D-C) enthält.

4. Zähler-/Zeitgeber-Schaltung nach Anspruch 3, **dadurch gekennzeichnet,** daß an mindestens einer der Eingangskontrollschaltungen (IC) der Systemtakt (SC) des Microkontrollers anliegt.

5. Zähler-/Zeitgeber-Schaltung nach Anspruch 3, **dadurch gekennzeichnet,** daß die Eingangskontrollschaltung (IC) und die Aufwärts-/Abwärts-Zählrichtungssteuerung (U/D-C) mit einem Eingangspin des Microcontrollers verbunden sind.

6. Zähler-/Zeitgeber-Schaltung nach einem der vorangehenden Ansprüche, **dadurch gekennzeichnet,** daß der Ausgang des dem Zentral-Register (T2) zugeordneten bistabilen Ausgangsspeicherelementes (OTL2) mit jeweils einem Eingang der den Hilfs-Registern (T1, T3) zugeordneten Eingangkontrollblöcken (ICB) verbunden ist.

7. Zähler-/Zeitgeber-Schaltung nach einem der vorangehenden Ansprüche, **dadurch gekennzeichnet,** daß der Übertrags-Ausgang des Zentral-Registers (T2) zusätzlich mit den Eingängen der bistabilen Ausgangsspeicherelemente (OTL1, OTL3) der Hilfs-Register (T1, T3) verbunden ist.

8. Zähler-/Zeitgeber-Schaltung nach einem der vorangehenden Ansprüche,
**dadurch gekennzeichnet,** daß die Eingangskontrollblöcke (ICB) der Hilfs-Register (T1, T3) direkt mit dem jeweiligen Unterbrechungsanforderungs-Element (IR1, IR3) verbunden sind.

9. Zähler-/Zeitgeber-Schaltung nach einem der vorangehenden Ansprüche,
**dadurch gekennzeichnet,** daß die Eingangskontrollblöcke (ICB) der Hilfs-Register (T1, T3) mit den jeweils zugeordneten Reload-(REL) und Capture-(CAP)-Einheiten verbunden sind.

**Claims**

1. Counter/timer circuit for a microcontroller, having programmable registers which serve as counters/timers and have a counting input, a carry-out output and data inputs/outputs, having reload units (REL) for presetting a counter/timer, having capture units (CAP) for accepting the current counter/timer reading, and having compare units (COM) for comparing the counter/timer reading, characterized by a central register (T2) and two auxiliary registers (T1, T3), the carry-out outputs of the registers (T1, T2, T3) being connected in each case to a bistable output latch element (OTL1, OTL2, OTL3) and to an interrupt request element (IR1, IR2, IR3), and the counting inputs of the registers (T1, T2, T3) being connected, via a respective start/stop element (S/S), in each case to an input control block (ICB) for controlling the respective counter/timer, and the data inputs/outputs of both auxiliary registers (T1, T3) being connected to the data inputs/output of the central register (T2) in each case via reload (REL), capture (CAP), and compare (COM) units.

2. Counter/timer circuit according to Claim 1, characterized in that the registers (T1, T2, T3) can be programmed independently of each other.

3. Counter/timer circuit according to one of the preceding claims, characterized in that each input control block (ICB) includes an input control circuit (IC) and an up/down counting direction controller (U/D-C).

4. Counter/timer circuit according to Claim 3, characterized in that the system clock (SC) of the microcontroller is connected to at least one of the input control circuits (IC).

5. Counter/timer circuit according to Claim 3, characterized in that the input control circuit (IC) and the up/down counting direction controller (U/D-C) are connected to an input pin of the microcontroller.

6. Counter/timer circuit according to one of the preceding claims, characterized in that the output of the bistable output latch element (OTL2) assigned to the central register (T2) is connected to in each case one input of the input control blocks (ICB) assigned to the auxiliary registers (T1, T3).

7. Counter/timer circuit according to one of the preceding claims, characterized in that the carry-out output of the central register (T2) is additionally connected to the inputs of the bistable output latch elements (OTL1, OTL3) of the auxiliary registers (T1, T3).

8. Counter/timer circuit according to one of the preceding claims, characterized in that the input control blocks (ICB) of the auxiliary registers (T1, T3) are directly connected to the respective interrupt request element (IR1, IR3).

9. Counter/timer circuit according to one of the preceding claims, characterized in that the input control blocks (ICB) of the auxiliary registers (T1, T3) are connected to the respectively assigned reload (REL) and capture (CAP) units.

**Revendications**

1. Circuit à compteur/minuterie pour un microcontrôleur, comportant des registres programmables utilisés comme compteur/minuterie et qui possèdent une entrée de comptage, une entrée de report et des entrées/sorties de données, et comportant des unités de rechargement (REL) servant à réaliser le positionnement préalable d'un compteur/d'une minuterie, des unités de captage (AP) pour transférer l'état actuel du compteur/de la minuterie, et des unités de comparaison (COM) pour comparer l'état du compteur/de la minuterie,
caractérisé par un registre central (T2) et deux registres auxiliaires (T1, T3), les sorties de report des registres (T1, T2, T3) étant connectées respectivement à un élément de mémoire de sortie bistable (OTL1, OTL2, OTL3) ainsi qu'à un élément de demande d'interruption (IR1, IR2, IR3), tandis que les entrées de comptage des registres (T1, T2, T3) sont connectées, par l'intermédiaire d'éléments de démarrage/arrêt respectifs (S/S), respectivement à un bloc de contrôle d'entrée (ICB) pour la commande du compteur respectif/de la minuterie respective, et que les entrées/sorties de données des deux registres auxiliaires (T1, T3) sont raccordées respectivement, par l'intermédiaire d'une unité de rechargement (REL), d'une unité de captage (CAP) et d'une unité de comparaison (COM), à l'entrée/sortie de données du registre central (T2).

2. Circuit à compteur/minuterie suivant la revendication 1, caractérisé par le fait que les registres (T1, T2, T3) sont programmables indépendamment les uns des autres.

3. Circuit à compteur/minuterie suivant l'une des revendications précédentes, caractérisé par le fait que chaque bloc de contrôle d'entrée (ICB) comporte un circuit de contrôle d'entrée (IC) et une unité de commande du sens de comptage progressif/régressif (U/D-C).

4. Circuit à compteur/minuterie suivant la revendication 3, caractérisé par le fait que la cadence système (SC) du microcontrôleur est appliquée à au moins l'un des circuits de contrôle d'entrée (IC).

5. Circuit à compteur/minuterie suivant la revendication 3, caractérisé par le fait que le circuit de contrôle d'entrée (IC) et l'unité de commande du sens de comptage progressif/régressif (U/D-C) sont connectés à une broche d'entrée du microcontrôleur.

6. Circuit à compteur/minuterie suivant l'une des revendications précédentes, caractérisé par le fait que la sortie de l'élément de mémoire de sortie bistable (OTL2), qui est associé au registre central (T2), est reliée respectivement à une entrée des blocs de contrôle d'entrée (ICB), qui sont associés aux registres auxiliaires (T1, T3).

7. Circuit à compteur/minuterie suivant l'une des revendications précédentes, caractérisé par le fait que la sortie de report du registre central (T2) est reliée, en outre, aux entrées des éléments de mémoire de sortie bistable (OT1, OT3) des registres auxiliaires (T1, T3).

8. Circuit à compteur/minuterie suivant l'une des revendications précédentes, caractérisé par le fait que les blocs de contrôle d'entrée (ICB) des registres auxiliaires (T1, T3) sont reliés directement à l'élément respectif de demande d'interruption (IR1, IR3).

9. Circuit à compteur/minuterie suivant l'une des revendications précédentes, caractérisé par le fait que les blocs de contrôle d'entrée (ICB) des registres auxiliaires (T1, T3) sont reliés aux unités respectivement associées de rechargement (REL) et de captage (CAP).

FIG 1